# FASCICULE DE BREVET EUROPEEN

(11) **EP 2 073 340 B1**
(45) Date de publication et mention de la délivrance du brevet: **02.12.2015**
(21) Numéro de dépôt: 08171660.7
(22) Date de dépôt: 15.12.2008
(51) Int. Cl.: B64G 1/42, B64G 1/44, H02J 7/35

(54) **Système d'alimentation électrique pour satellite**
Stromversorgungssystem für Satelliten
Electricity supply system for a satellite

(30) Priorité: 19.12.2007 FR 0760037
(43) Date de publication de la demande: 24.06.2009
(73) Titulaire: Airbus Defence and Space SAS, 78130 Les Mureaux (FR)
(72) Inventeur: Diraison, Jean-François, 31200, TOULOUSE (FR); Trehet, Eric, 78280, GUYANCOURT (FR)
(74) Mandataire: Cabinet Plasseraud

(56) Documents cités:
- US-A- 6 157 161
- O'SULLIVAN D: "Space power electronics - Design Drivers" E.S.A. JOURNAL, ESA PUBLICATIONS DIVISION, ESTEC, NL, vol. 18, no. 1, 1 janvier 1994 (1994-01-01), pages 1-23, XP001155349 ISSN: 0379-2285
- HAINES J E ET AL: "The X-ray multi mirror (XMN-newton) power system" ENERGY CONVERSION ENGINEERING CONFERENCE AND EXHIBIT, 2000. (IECEC) 35 TH INTERSOCIETY 24-28 JULY 2000, PISCATAWAY, NJ, USA,IEEE, vol. 1, 24 juillet 2000 (2000-07-24), pages 221-231, XP010512661 ISBN: 978-1-56347-375-3

## Description

La présente invention concerne un système d'alimentation électrique pour satellite, ainsi qu'un satellite qui comprend un tel système d'alimentation.

Plus précisément, elle concerne un système d'alimentation électrique du type à tension continue régulée en permanence. Un tel système est conçu pour alimenter différents équipements qui consomment de l'énergie électrique avec une tension («voltage» en anglais) qui est constante, quelques soient le niveau de cette consommation et la source de l'énergie fournie.

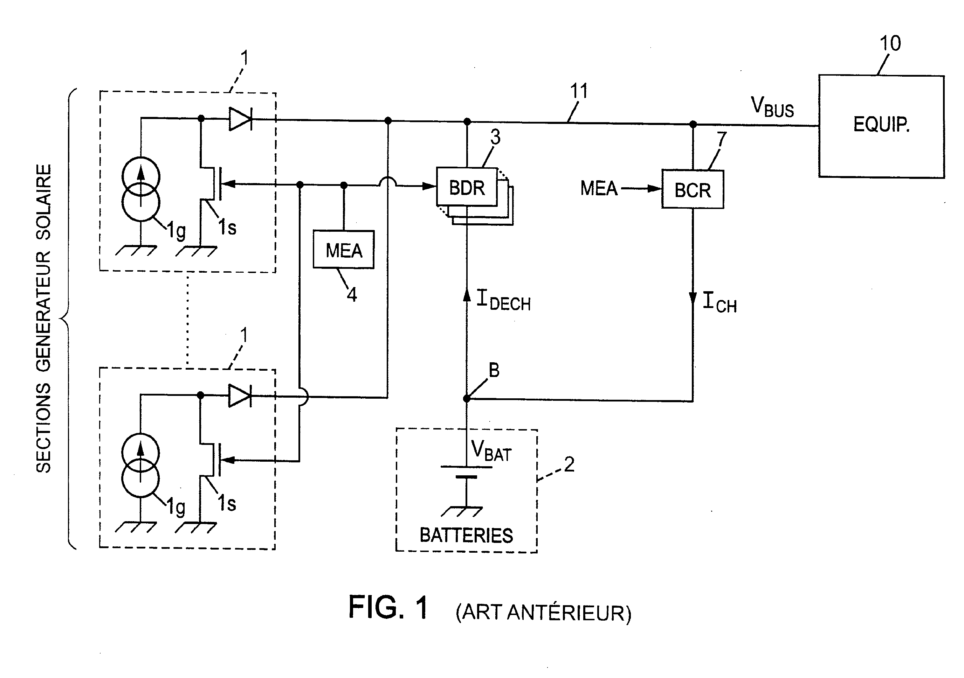

De façon connue, et en référence à la figure 1, un tel système d'alimentation à tension régulée en permanence comprend les éléments suivants :
- une barre d'alimentation 11, appelée «Main Power Bus» en anglais, qui est destinée à être connectée à un ensemble d'équipement 10 consommateur d'énergie électrique ;
- plusieurs sections de générateur solaire 1, qui sont reliées à la barre d'alimentation 11 ;
- un ensemble de batterie 2, qui possède une borne de sortie B ;
- plusieurs modules de régulation de décharge de batterie, notés BDR pour «Battery Discharge Regulator» et référencés 3, qui sont connectés chacun entre le point de sortie B de l'ensemble de batterie et la barre d'alimentation 11 ; et
- un amplificateur d'erreur, qui est adapté pour produire au moins un signal de contrôle du courant qui doit être transmis à la barre d'alimentation 11 pour maintenir constant le potentiel électrique de celle-ci.

L'amplificateur d'erreur peut être du type régulateur proportionnel-intégral. Il est noté MEA pour «Main Error Amplifier» et référencé 4. Le potentiel électrique de la barre d'alimentation 11 est noté V_{BUS}.

Ainsi, le système d'alimentation électrique comprend deux sources de puissance : les sections de générateur solaire 1 d'une part, et l'ensemble de batterie 2 d'autre part. Le nombre de sections de générateur solaire 1, de même que la capacité de l'ensemble de batterie 2, est fixé en fonction d'une consommation électrique moyenne de l'ensemble d'équipement 10. Chaque section de générateur solaire 1 comprend une chaîne de génération de courant continu 1g et un commutateur 1s. Le commutateur 1 s est adapté pour envoyer un courant électrique qui est produit par la chaîne 1g à la barre d'alimentation 11, ou pour inhiber une sortie de ce courant vers la barre 11. En fonctionnement dit de jour, c'est-à-dire lorsque les sections de générateur solaire 1 sont illuminées par le soleil, celles-ci produisent un courant électrique qui est transmis par la barre d'alimentation 11 à l'ensemble d'équipement 10. Eventuellement, si ce courant est insuffisant par rapport à la consommation de l'ensemble d'équipement 10, il est complété à partir d'un courant de décharge de l'ensemble de batterie 2, noté I_{DECH} sur la figure 1. En fonctionnement de nuit, c'est-à-dire lorsque les sections de générateur solaire 1 ne produisent aucun courant, l'ensemble d'équipement 10 est alimenté uniquement par l'ensemble de batterie 2.

A titre d'exemple, le potentiel constant V_{BUS} de la barre d'alimentation 11 peut être égal à 50 V (volts), et la puissance moyenne de consommation de l'ensemble d'équipement 10 peut varier entre 5 ou 10 kW (kiloWatt).

De façon connue, chaque module BDR 3 peut comprendre un convertisseur de tension qui permet de transférer une quantité de courant depuis une entrée du module ayant un potentiel électrique d'entrée vers une sortie du module ayant un potentiel électrique de sortie. Cette quantité de courant est déterminée par un signal de contrôle qui est transmis à une entrée de commande du module. Dans le système de la figure 1, l'entrée de chaque module BDR 3 est connectée au point de sortie B et sa sortie est connectée à la barre d'alimentation 11. Le potentiel d'entrée des modules 3 est donc celui du point de sortie B de l'ensemble de batterie 2, et le potentiel de sortie des modules 3 est V_{BUS}. Le courant qui est transmis par les modules BDR 3 à la barre d'alimentation 11 est alors I_{DECH} x V_{B}/N_{BUS}.

En fonctionnement de jour, les deux modes d'alimentation électrique, à partir des sections de générateur solaire 1 seulement ou bien à la fois à partir de celles-ci et de l'ensemble de batterie 2, sont contrôlés par l'amplificateur 4. Pour cela, l'amplificateur 4 compare le potentiel électrique réel V_{BUS} de la barre d'alimentation 11 à une consigne fixe, qui est le potentiel d'alimentation voulu.

Lorsque les sections de générateur solaire 1 fourniraient à elles seules un courant qui est trop important par rapport à la consommation de l'ensemble d'équipement 10, l'amplificateur d'erreur 4 réduit le nombre moyen de sections de générateur solaire 1 qui sont connectées électriquement à la barre d'alimentation 11, pour éviter que le potentiel V_{BUS} de celle-ci ne dépasse la valeur voulue. Pour cela, l'amplificateur 4 est connecté à l'entrée de commande du commutateur 1s de chaque section de générateur solaire 1, de sorte qu'un courant moyen qui est transmis par ces sections peut être ajusté conformément au signal de contrôle produit par l'amplificateur. Pratiquement, l'ajustement est réalisé en commandant par intermittence la transmission à la barre 11 du courant de certaines des sections 1. La régulation du potentiel V_{BUS} résulte alors d'un rapport cyclique de durées de transmission/inhibition. L'amplificateur 4 commande simultanément un blocage des modules de régulation de décharge de batterie 3, de sorte qu'aucun courant n'est fourni par l'ensemble de batterie 2 (I_{DECH}=0).

Lorsque le courant qui est fourni par les sections de générateur solaire 1 est insuffisant par rapport à la consommation de l'ensemble d'équipement 10, l'amplificateur d'erreur 4 commande une transmission à la barre d'alimentation 11 de l'ensemble du courant qui est produit par les sections 1, et active simultanément les modules BDR 3. Ces derniers ajustent alors le courant I_{DECH} de décharge de l'ensemble de batterie 2 afin d'alimenter l'ensemble d'équipement 10 en maintenant constant le potentiel électrique V_{BUS} de la barre 11. Pour cela, l'amplificateur 4 est aussi connecté à l'entrée de commande de chaque module BDR 3, de sorte que le courant de décharge de l'ensemble de batterie 2 soit ajusté conformément au signal de contrôle qui est produit par l'amplificateur.

Ces deux modes d'ajustement du courant qui est fourni à la barre d'alimentation 11, en contrôlant de façon variable les commutateurs 1 s des sections de générateur solaire ou les modules BDR 3, peuvent être distingués, par exemple et de façon connue, par le signe du signal de contrôle qui est produit par l'amplificateur 4.

II est entendu qu'un condensateur connecté entre la barre d'alimentation 11 et une borne de référence du système, et qui n'est pas représenté, peut être utilisé pour réduire des variations résiduelles du potentiel V_{BUS}.

Enfin, pour recharger l'ensemble de batterie 2, le système comprend en outre au moins un module de régulation de charge de batterie 7, noté BCR pour «Battery Charge Regulator». Ce module 7 est connecté électriquement entre la barre d'alimentation 11 et le point de sortie B de l'ensemble de batterie 2. Il est activé par l'amplificateur 4 lorsque les sections de générateur solaire 1 peuvent produire un courant qui est supérieur à la consommation de l'ensemble d'équipement 10. Le module 7 contrôle alors un courant de charge, noté I_{CH}, qui circule depuis la barre 11, à travers ce module 7, vers l'ensemble de batterie 2. Ce courant de charge est ajusté en fonction du niveau de charge de l'ensemble de batterie 2, conformément à une caractéristique de charge qui est fournie par le fabricant de cet ensemble de batterie.

Mais l'utilisation d'un tel module de régulation de charge de batterie présente les inconvénients suivants :
- il participe à accroître la masse du satellite, ce qui est particulièrement pénalisant pour le coût de lancement de ce dernier ;
- il est onéreux, notamment parce qu'il s'agit d'un composant de puissance, par opposition à des composants de contrôle ; et
- en tant que convertisseur de tension, il produit de la chaleur qui doit être évacuée de façon appropriée au sein du satellite.

Pour éviter ces inconvénients des modules de régulation de charge de batterie, le document EP 1 073 176, correspondant à US 6,157,161, divulgue un système d'alimentation électrique pour satellite à tension continue régulée en permanence, qui est dépourvu de module BCR. Dans ce système, certaines sections de générateur solaire sont reliées d'une part à la barre d'alimentation de l'ensemble d'équipement, et d'autre part à l'entrée de l'ensemble de batterie par l'intermédiaire d'interrupteurs commandés. Lorsque l'un de ces interrupteurs est ouvert, de sorte que la section de générateur solaire correspondante n'est plus reliée directement à l'ensemble de batterie, cette section de générateur solaire peut participer à l'alimentation de l'ensemble d'équipement de façon usuelle, comme décrit précédemment. Lorsque l'un des interrupteurs commandés est fermé, de façon à connecter électriquement la section de générateur solaire correspondante à l'ensemble de batterie, ce dernier est rechargé directement, sans que le courant de charge produit par la section ne transite par la barre d'alimentation. Mais dans un tel système d'alimentation, le courant de charge de l'ensemble de batterie ne peut être ajusté qu'en variant le nombre de sections de générateur solaire qui sont connectées temporairement à l'ensemble de batterie. Pour cette raison, ce courant de charge ne peut pas être ajusté finement par rapport à l'état de charge de l'ensemble de batterie qui est déjà atteint. Une telle inadaptation du courant de charge peut provoquer une diminution de la durée de vie de l'ensemble de batterie, et donc une réduction de la durée de fonctionnement d'un satellite équipé avec ce système d'alimentation.

Le document "Space power electronics - Design Drivers" (D. O'Sullivan, ESA Journal, ESA Publications Division, ESTEC, The Neteherlands, vol. 18, no. 1, janvier 1994, pages 1-23, ISSN: 0379-2285) décrit un système d'alimentation électrique pour satellite tel que connu de l'art antérieur. En effet, les sections de charge qui sont représentées dans la figure 15 de ce document sont connectées aux batteries de manière continue, et le commutateur qui est désigné par EOC interrompt seulement la charge quand les batteries sont chargées. Aucune régulation n'est prévue ni possibilité de réutiliser les sections de charges sur la barre d'alimentation.

Un but de la présente invention est alors d'éviter les inconvénients du module de régulation de charge de batterie qui sont cités plus haut, tout en permettant d'ajuster finement le courant de charge de l'ensemble de batterie.

Pour cela, l'invention propose un système d'alimentation électrique pour satellite qui est du type précédent, hormis qu'au moins une des sections de générateur solaire et au moins un des modules de régulation de décharge de batterie sont connectés et/ou commandés différemment. Les autres sections de générateur solaire et les autres modules de régulation de décharge de batterie ont des mises en oeuvre qui ne sont pas modifiées.

Selon l'invention, au moins une des sections de générateur solaire est reliée au point de sortie de l'ensemble de batterie, au lieu de la barre d'alimentation, sans l'intermédiaire d'aucun module de régulation de décharge de batterie. Ainsi, le courant qui est transmis par cette section de générateur solaire peut être transmis directement à l'ensemble de batterie pour recharger ce dernier, sans transiter par la barre d'alimentation. La section de générateur solaire qui est ainsi connectée est donc dédiée en priorité à la charge de l'ensemble de batterie. Pour cette raison, elle est appelée dans la suite section de charge. Les connexions des autres sections de générateur solaire ne sont pas modifiées : elles sont encore connectées à la barre d'alimentation sans l'intermédiaire d'aucun module de régulation de décharge de batterie.

En outre, au moins l'un des modules de régulation de décharge de la batterie est sélectionné pour être aussi dédié à la charge de l'ensemble de batterie. Pour cela, ce module BDR est encore connecté entre la borne de sortie de l'ensemble de batterie et la barre d'alimentation, mais son entrée de commande n'est plus connectée directement à l'amplificateur d'erreur. A la place de cette dernière connexion, le système d'alimentation comprend en outre un premier régulateur additionnel qui est connecté à l'entrée de commande du module sélectionné. Ce premier régulateur additionnel est adapté pour transmettre au module sélectionné un signal d'ajustement d'un courant résiduel qui correspond à un excès du courant produit par la section de charge par rapport à une consigne de charge de l'ensemble de batterie. La consigne de charge peut être programmée en fonction de l'état de charge de la batterie qui est déjà atteint. Le courant résiduel est retransmis à la barre d'alimentation, de sorte qu'il participe à l'alimentation de l'ensemble d'équipement.

De plus, l'amplificateur d'erreur est aussi connecté au premier régulateur additionnel pour activer un fonctionnement de ce dernier. L'amplificateur d'erreur fonctionne alors avantageusement de la même façon que lorsqu'il contrôle le fonctionnement d'un module de régulation de décharge de batterie pour un système d'alimentation conforme à la figure 1, lorsque la puissance qui est fournie par les sections de générateur solaire n'est pas suffisante pour alimenter l'ensemble d'équipement consommateur d'énergie électrique. Ainsi, une charge de l'ensemble de batterie peut être effectuée à partir de la section de charge pendant que certaines des sections de générateur solaire autres que cette section de charge transmettent à la barre d'alimentation un courant qui, avec le courant résiduel, alimente l'ensemble d'équipement.

L'invention consiste donc à affecter une ou plusieurs sections de générateur solaire prioritairement à la recharge de l'ensemble de batterie. Pour cela, cette section, ou ces sections, est (sont) connectée(s) directement à la borne de sortie de l'ensemble de batterie, au lieu d'être connectée(s) directement à la barre d'alimentation. Un ou plusieurs module(s) de régulation de décharge de batterie est (sont) simultanément dédié(s) à la charge de l'ensemble de batterie. Pour cela, il(s) est (sont) contrôlé(s) par le premier régulateur additionnel, au lieu d'être contrôlé(s) directement par l'amplificateur d'erreur.

L'invention permet de recharger l'ensemble de batterie sans nécessiter de module de régulation de charge de batterie. Pour cela, l'ajustement d'un courant de charge par un module BCR est remplacé par l'ajustement du courant résiduel par le module BDR sélectionné. Le système d'alimentation électrique peut donc être dépourvu de module BCR. Le mode de charge de l'ensemble de batterie qui est alors obtenu est appelé par les inventeurs charge par diversion.

En outre, pour alimenter un même ensemble d'équipement, l'invention ne nécessite pas d'ajouter de section de générateur solaire supplémentaire, ni de module de régulation de décharge supplémentaire. Le nombre de ces composants de puissance est donc constant, tout en ayant retiré du système tout module de régulation de charge de batterie. Etant donné que le premier régulateur additionnel qui est ajouté au système d'alimentation selon l'invention n'est qu'un circuit électronique intégré de contrôle, il est léger et peu onéreux. La masse et le coût du système global d'alimentation électrique sont donc réduits par l'invention.

En fait, l'invention procède par une meilleure utilisation du courant qui est produit par les sections de générateur solaire, lorsque ce courant est supérieur à la consommation de l'ensemble d'équipement. La (les) section(s) de charge recharge(nt) alors non seulement l'ensemble de batterie, mais produisent simultanément le courant résiduel qui est utilisé par l'ensemble d'équipement, en même temps que le courant qui est produit par les autres sections de générateur solaire, dont la mise en oeuvre n'est pas modifiée.

En outre, l'affectation d'un ou plusieurs module(s) de régulation de décharge de batterie à la charge de l'ensemble de batterie permet d'ajuster finement le courant de charge.

Un premier perfectionnement de l'invention peut être prévu pour permettre de recharger l'ensemble de batterie lorsque la transmission à la barre d'alimentation d'un courant résiduel n'est pas compatible avec le courant qui est demandé pour alimenter l'ensemble d'équipement. Cette situation d'incompatibilité correspond à un courant résiduel délivré par le (les) module(s) de régulation de décharge de batterie dédié(s) à la charge de l'ensemble de batterie selon l'invention, qui est supérieur au courant consommé par l'ensemble d'équipement. Pour cela, le système peut comprendre en outre un second régulateur additionnel qui est connecté à l'entrée de commande du (des) commutateur(s) de la (des) section(s) de charge. Ce second régulateur additionnel n'est sélectionné que lorsque le mode de charge par diversion n'est pas compatible avec la consommation de l'ensemble d'équipement. Il est alors adapté pour commander un ajustement direct du courant qui est transmis par la (les) section(s) de charge à la borne de sortie de l'ensemble de batterie. L'ajustement consiste alors à réduire, en modifiant le rapport cyclique du (des) commutateur(s) de la (des) section(s) de charge, le courant qui est transmis par celle(s)-ci de façon que la consigne de charge soit respectée.

Un second perfectionnement de l'invention est plus particulièrement prévu pour une période assez longue pendant laquelle l'ensemble de batterie est inutilisé. Dans ce cas, il peut être avantageux d'isoler l'ensemble de batterie par rapport à la (aux) section(s) de charge. Pour cela, le système d'alimentation peut comprendre en outre un commutateur d'équinoxe qui est connecté entre la (les) section(s) de charge et la borne de sortie de l'ensemble de batterie. Ce commutateur d'équinoxe permet de connecter électriquement la (les) section(s) de charge à la barre d'alimentation, au lieu que cette (ces) section(s) soient connectées à la borne de sortie de l'ensemble de batterie.

Eventuellement, les premier et second régulateurs additionnels peuvent être adaptés en outre de sorte que, lorsque le commutateur d'équinoxe relie électriquement la section de charge à la barre d'alimentation et lorsque le second régulateur additionnel est sélectionné après une inhibition du premier, il existe un intervalle d'ajustement de la consigne de charge dans lequel le premier régulateur commande une annulation du courant qui est retransmis à la barre d'alimentation par le(s) module(s) de régulation de décharge sélectionné(s), et le second régulateur commande simultanément une annulation du courant qui est transmis par la (les) section(s) de charge à la barre d'alimentation lorsque ce second régulateur est sélectionné après l'inhibition du premier régulateur. De cette façon, seules les sections de générateur solaire autres que la (les) section(s) de charge sont alors opérationnelles. Tout conflit de régulation du potentiel électrique de la barre d'alimentation est ainsi évité.

L'invention propose aussi un satellite qui comprend un système d'alimentation électrique tel que décrit précédemment. Ce peut être, notamment, un satellite de type géostationnaire.

D'autres particularités et avantages de la présente invention apparaîtront dans la description ci-après d'un exemple de réalisation non limitatif, en référence aux dessins annexés, dans lesquels :
- la figure 1 est un diagramme synoptique d'un système d'alimentation électrique pour satellite, à tension régulée en permanence, tel que connu de l'art antérieur ; et
- la figure 2 est un diagramme synoptique d'un système d'alimentation électrique pour satellite, à tension régulée en permanence, conforme à la présente invention.

La figure 1 a déjà été décrite plus haut de façon complète, ainsi que le fonctionnement du système d'alimentation électrique correspondant.

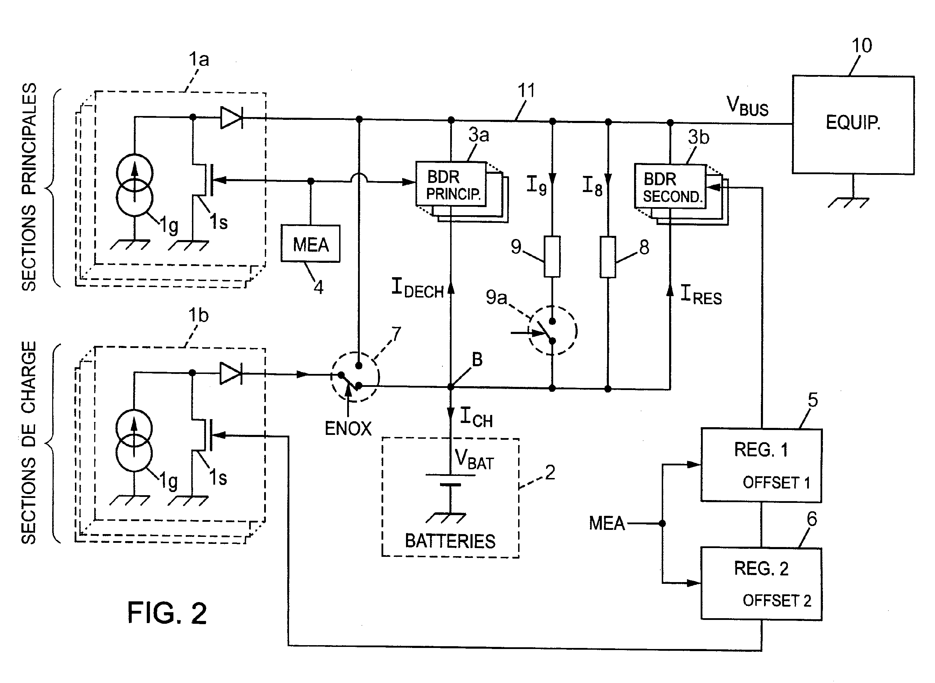

Le système de la figure 2 est maintenant décrit en détail, pour les parties de celui-ci qui diffèrent du système de la figure 1 et qui illustrent l'invention et/ou des perfectionnements de celle-ci. Les composants du système de la figure 2 qui ont des références identiques à celles de composants présents dans la figure 1 sont identiques à ces derniers, et ont un fonctionnement identique. Pour cette raison, ils ne sont pas décrits à nouveau.

Le système d'alimentation électrique de la figure 2 est encore du type à tension d'alimentation régulée en permanence. Cette tension peut être quelconque, par exemple 18 V, 42,5 V, 50 V ou même 100 V. Le potentiel électrique constant V_{BUS} de la barre d'alimentation 11 qui correspond à cette tension est mesuré par rapport à une borne de référence des batteries 2. A bord d'un satellite, cette borne de référence peut être connectée à la masse du satellite.

Selon le principe de la charge par diversion objet de l'invention, les sections de générateur solaire sont divisées en deux groupes comme suit, selon leurs connexions respectives à la barre d'alimentation 11 et, éventuellement, de leur mode de commande.

Un premier groupe de sections de générateur solaire, qui sont appelées sections principales et référencées 1 a, est dédié à l'alimentation des équipements 10 via la barre d'alimentation 11. Ces sections 1a sont connectées directement à la barre 11 et contrôlées par l'amplificateur d'erreur 4 de la façon qui a été décrite en relation avec la figure 1. On entend par «sections principales 1a connectées directement à la barre 11» une liaison électrique entre ces composants qui n'incorpore aucun module de régulation de charge/décharge de batterie.

Un second groupe de sections de générateur solaire, qui sont appelées sections de charge et référencées 1b, est dédié au rechargement des batteries 2. Les sections de charge 1b sont connectées directement à la borne de sortie B des batteries 2, de sorte qu'un courant qui est produit par les sections de charge 1 b est transmis à la borne B lorsque la sortie de ce courant n'est pas inhibée par les commutateurs 1s internes à ces sections. Les inventeurs précisent que les sections de charges 1b ne subissent aucune modification ni adaptation par rapport aux sections principales 1a, et ne se distinguent de ces dernières que par leur mode de connexion et leur mode de contrôle au sein du système d'alimentation. On entend par «sections de charge 1b connectées directement à la borne B» une liaison électrique entre ces composants qui n'incorpore aucun module de régulation de charge/décharge de batterie.

Par exemple, le nombre des sections principales 1 a peut être vingt-quatre ou quarante-huit, et le nombre de sections de charge 1 b peut être de un à quatre.

De façon facultative, les sections de charge 1b peuvent être connectées à la borne B par l'intermédiaire d'un commutateur 7, dont la fonction sera expliquée plus loin. Pour raison de clarté de la suite de la description, on suppose dans un premier temps que le commutateur 7 relie électriquement les sections de charge 1b à la borne B, jusqu'à indication contraire.

Les modules de régulation de décharge de batterie, ou BDR, sont tous connectés entre la borne B et la barre d'alimentation 11, de façon à conduire chacun un courant positif qui circule de la borne B vers la barre 11. Selon l'invention, ils sont aussi divisés en deux groupes, en fonction de leur mode de commande.

Un premier groupe de modules BDR, appelés modules principaux et référencés 3a, est dédié à l'alimentation des équipements 10 à partir des batteries 2. Les batteries 2 peuvent ainsi alimenter en courant les équipements 10 pour la totalité de la consommation de ces derniers, ou en complément d'un courant qui est fourni par les sections de générateur solaire. Un courant de décharge des batteries 2, noté I_{DECH}, circule alors de la borne B vers la barre 11, à travers les modules principaux 3a. Ces modules 3a sont contrôlés par l'amplificateur d'erreur 4 pour maintenir le potentiel V_{BUS} constant, de la façon qui a déjà été décrite en relation avec la figure 1. Le système d'alimentation de l'invention possède donc un fonctionnement de nuit, en utilisant les modules BDR principaux 3a, qui est identique à celui du système de la figure 1.

Des modules BDR d'un second groupe, appelés modules secondaires et référencés 3b, sont dédiés au contrôle de la recharge des batteries 2 en fonctionnement de jour. Pour cela, une entrée de commande des modules secondaires 3b est connectée à une sortie d'un premier régulateur additionnel, référencé 5 et noté REG. 1. Ce second groupe de modules BDR pourra également être utilisé avec le premier groupe de modules BDR pour alimenter les équipements 10 à partir des batteries 2.

En fonctionnement de jour, lorsque les sections principales 1a suffisent à alimenter les équipements 10, alors I_{DECH}=0 et les modules secondaires 3b contrôlent le courant I_{RES} = I_{1b} - I_{CH}, où I_{1b} est le courant produit par les sections de charge 1 b et I_{CH} est le courant demandé pour la charge des batteries 2, qui entre dans celles-ci par la borne B. Le courant I_{RES}, appelé courant résiduel, est retransmis par les modules secondaires 3b à la barre d'alimentation 11. II participe ainsi à l'alimentation des équipements 10, avec le courant qui est produit par les sections principales 1a. Le régulateur 5 calcule une consigne d'ajustement du courant I_{RES} en fonction d'une mesure du courant I_{1b} et d'une consigne de courant de charge des batteries, puis transmet la consigne du courant I_{RES} aux modules secondaires 3b. La consigne de courant de charge peut elle-même dépendre de l'état de charge des batteries 2 qui est déjà atteint, auquel cas le régulateur 5 peut être connecté en outre pour recevoir un signal de caractérisation de cet état de charge.

En fonctionnement de nuit, lorsque les sections principales 1 a ne suffisent pas à alimenter les équipements 10, les modules secondaires 3b sont commandés de la même façon que les modules principaux 3a pour optimiser le système complet.

Par exemple, le nombre des modules principaux 3a peut être douze, et le nombre de modules secondaires 3b qui sont dédiés à la charge des batteries 2 peut être de un à quatre. Grâce à cette utilisation de modules BDR pour ajuster le courant I_{RES}, le courant de charge I_{CH} peut être ajusté lui-même avec une précision suffisante. Un fonctionnement optimal des batteries 2 peut ainsi être maintenu sur une longue durée.

De façon préférentielle pour optimiser une utilisation de la puissance électrique disponible, une production de courant par la ou les section(s) de charge 1b peut être commandée prioritairement par rapport à une production de courant par les sections principales 1 a qui serait accrue. Ceci permet notamment de garantir l'état de charge des batteries 2.

Le régulateur 5 est lui-même activé par l'amplificateur 4 au moyen d'une ligne de contrôle spécifique. De cette façon, le mode de charge des batteries par diversion qui vient d'être décrit n'est activé que lorsque l'ensemble des sections de générateur solaire 1 a et 1b suffisent à alimenter les équipements 10. L'amplificateur 4 commande alors un blocage des modules principaux 3a, de sorte que les batteries ne délivrent aucun courant de décharge (I_{DECH}=0).

Un second régulateur additionnel 6, qui est noté REG. 2 sur la figure 2, peut être prévu en outre pour supprimer si nécessaire le courant I_{RES} qui est produit par le mode de charge par diversion. Cela peut être utile lorsque les équipements 10 ont une faible consommation et que les batteries 2 sont presque ou complètement rechargées. Dans ce cas, le courant I_{RES} du fonctionnement de jour décrit ci-dessus pourrait être trop important par rapport à la consommation des équipements 10, provoquant une surtension d'alimentation. Les modules BDR principaux 3a et secondaires 3b sont alors bloqués (I_{DECH}=0). Le régulateur 6 est autorisé par l'amplificateur 4, et génère un signal de contrôle du rapport cyclique de commutation des commutateurs 1 s des sections de charges 1b, de sorte que ces sections produisent directement un courant qui est conforme à la consigne de charge de batteries 2. Par voie de conséquence, le courant I_{RES} est supprimé. De cette façon, le potentiel V_{BUS} de la barre d'alimentation 11 est encore maintenu constant.

Le commutateur 7 possède une entrée qui est connectée aux sections de charge 1b, et deux sorties qui sont connectées respectivement à la barre d'alimentation 11 et à la borne B de sortie des batteries 2. Un signal externe, notée ENOX, permet de commander l'état du commutateur 7 de sorte que son entrée soit mise en contact électrique avec l'une ou l'autre de ses deux sorties. De cette façon, les sections de charge 1 b peuvent être connectées à la borne B pour les fonctionnements du système d'alimentation qui viennent d'être décrits. Alternativement, elles peuvent connectées par le commutateur 7 directement à la barre d'alimentation 11, sans l'intermédiaire de modules BDR.

L'isolation électrique qui peut ainsi être réalisée, entre les sections de charge 1 b et les batteries 2, est avantageuse notamment lorsque les batteries ne sont pas utilisées pendant une longue période. Elle permet de réduire une décharge des batteries 2 via des courants de fuite du système d'alimentation. Elle est encore plus avantageuse lorsque le potentiel électrique maximal de sortie des batteries 2 est inférieur au potentiel d'alimentation V_{BUS}. En effet, les sections de générateur solaire 1 a et 1b sont dimensionnées pour présenter en sortie la valeur de potentiel V_{BUS}, et le maintien des sections de charge au potentiel de la borne de sortie B provoque une réduction de leur capacité de puissance. Ainsi, lorsque les batteries 2 sont nécessaires pour alimenter les équipements 10 ou doivent être rechargées, le commutateur 7 est commandé pour connecter les sections de charge 1b à la borne de sortie B. En dehors de telles périodes, le commutateur 7 est avantageusement commandé pour connecter les sections de charge 1b à la barre d'alimentation 11. De cette façon, une puissance électrique disponible qui est plus grande est fournie par l'ensemble des sections de générateur solaire.

Lorsque le système d'alimentation de la figure 2 est installé à bord d'un satellite géostationnaire, les batteries 2 sont essentiellement inutiles pendant des premières périodes de longues durées autour des solstices d'été et d'hiver, et sont nécessaires pendant des secondes périodes plus courtes autour des équinoxes de printemps et d'automne. Le commutateur 7 peut alors être commandé pour connecter électriquement les sections de charge 1b à la barre 11 pendant les premières périodes, et à la borne B pendant les secondes périodes. Pour cette raison, le commutateur 7 est appelé «commutateur d'équinoxe» dans la présente demande de brevet. Il est entendu qu'il ne s'agit que d'une appellation établie sur un type particulier d'utilisation d'un système selon l'invention, et que l'invention peut être utilisée sur des satellites non-géostationnaires, ainsi que sur tout autre type de vaisseau à alimentation électrique embarquée.

Dans le mode particulier de réalisation de l'invention qui vient d'être décrit, un conflit de régulation du potentiel V_{BUS} peut apparaître lorsque le commutateur 7 relie électriquement les sections de charge 1 b directement à la barre d'alimentation 11. En effet, le régulateur additionnel 6 ne permet pas de commander ces sections en fonction du potentiel électrique de la barre d'alimentation. Il n'est donc pas adapté pour fonctionner lorsque la consommation électrique qui est requise par les équipements 10 est faible.

Pour éviter un tel conflit, selon un perfectionnement de l'invention qui est particulièrement économique, les régulateurs 5 et 6, qui sont respectivement utilisés pour le mode de charge par diversion et lorsque le mode de charge par diversion est incompatible avec le courant qui est demandé par les équipements, peuvent posséder deux décalages respectifs qui sont fixés initialement. Ces décalages sont adaptés de sorte que lorsque le signal de contrôle qui est produit par l'amplificateur 4 et transmis aux régulateurs 5 et 6 est intermédiaire entre les deux décalages, alors le régulateur 5 commande une annulation du courant qui est retransmis à la barre 11 par les modules BDR secondaires 3b, c'est-à-dire I_{RES}=0, et le régulateur 6 commande, s'il est sélectionné, une annulation du courant qui est transmis par les sections de charge 1b à la barre d'alimentation 11, c'est-à-dire I_{1b}=0. Ces décalages des régulateurs 5 et 6 sont notés respectivement OFFSET 1 et OFFSET 2. Par exemple, le régulateur 5 commande un courant I_{RES} qui n'est pas nul lorsque le signal de contrôle qui est produit par l'amplificateur 4 est supérieur à OFFSET 1, et le régulateur 6 commande la sortie effective du courant qui est produit par les sections de charge 1b lorsque le signal de contrôle de l'amplificateur 4 est inférieur à OFFSET 2. En fixant OFFSET 1 à un niveau qui est supérieur à celui de OFFSET 2, l'intervalle qui est compris entre ces deux décalages correspond à un réglage de la consigne de charge suivant lequel les modules BDR secondaires 3b sont bloqués et la sortie du courant I_{1b} à partir des sections de charge 1b, vers la barre d'alimentation 11, est inhibée si le régulateur 6 est sélectionné. Dans des conditions de faible consommation des équipements 10, ceux-ci ne sont alors alimentés que par les sections principales 1a. Un tel mode de fonctionnement, qui est déclenché lorsque le commutateur d'équinoxe 7 relie électriquement les sections de charge 1 b à la barre d'alimentation 11 et lorsque la consigne de charge est intermédiaire entre OFFSET 1 et OFFSET 2, est appelé par les inventeurs mode de fonctionnement en solstice. Bien entendu, il ne s'agit que d'une appellation qui ne restreint pas l'utilisation d'un tel mode de fonctionnement du système à une mise en oeuvre à bord d'un satellite géostationnaire, ni à une période de solstice.

Un perfectionnement supplémentaire de l'invention permet de recharger continûment les batteries 2 lorsque le potentiel électrique V_{BUS} de la barre d'alimentation 11 est supérieur au potentiel de sortie maximal des batteries 2. En effet, il est possible que les batteries 2 subissent une décharge lente. Une telle décharge peut avoir des causes internes aux batteries 2. L'Homme du métier parle alors d'autodécharge des batteries 2, par opposition à des causes de décharge externes aux batteries 2, telles que des courants de fuite présents dans le système d'alimentation électrique ou dans les équipements 10. Pour cela, le système peut comprendre en outre un premier ensemble de résistance électrique 8, qui est connecté entre la barre d'alimentation 11 et la borne B de sortie des batteries 2. Ce premier ensemble de résistance 8 est adapté pour permettre de recharger continûment les batteries 2 par un premier courant qui circule à travers l'ensemble 8. Ce premier courant est noté I₈ sur la figure 2 et circule de la barre 11 vers la borne de sortie B. Par exemple, l'ensemble 8 peut présenter une valeur résistance de quelques kiloohms. Pour un satellite géostationnaire, il peut permettre d'éviter de devoir recharger l'ensemble de batterie pendant environ quatre mois et demi autour des solstices d'été et d'hiver.

Un second ensemble de résistance électrique 9 peut aussi être connecté entre la barre d'alimentation 11 et la borne de sortie B, de façon temporaire, encore lorsque le potentiel électrique V_{BUS} de la barre d'alimentation 11 est supérieure au potentiel de sortie maximal des batteries 2. Pour cela, l'ensemble de résistance 9 peut être connecté en série avec un interrupteur commandé 9a. Ainsi, en fonctionnement de jour et lorsque la consommation des équipements 10 a nécessité d'utiliser momentanément les batteries 2, il est ensuite possible de fermer l'interrupteur 9a pour créer un chemin supplémentaire de recharge des batteries 2, à partir de la barre d'alimentation 11 via l'ensemble de résistance 9. Par exemple, l'ensemble de résistance 9 peut avoir une valeur de résistance de quelques centaines d'ohms. Une recharge des batteries 2 peut ainsi être effectuée pendant une durée limitée, sans déconnecter les sections de charges de la barre d'alimentation.

## Revendications

1. Système d'alimentation électrique pour satellite, à tension continue régulée en permanence, comprenant :
- une barre d'alimentation (11) destinée à être connectée à un ensemble d'équipement (10) consommateur d'énergie électrique ;
- plusieurs sections de générateur solaire (1) reliées à la barre d'alimentation (11) ;
- un ensemble de batterie (2) ayant une borne de sortie (B) ;
- plusieurs modules de régulation de décharge de batterie (3), connectés chacun entre le point de sortie de l'ensemble de batterie (B) et la barre d'alimentation (11) ; et
- un amplificateur d'erreur (4) adapté pour produire au moins un signal de contrôle d'au moins un courant transmis à la barre d'alimentation (11) de façon à maintenir constant un potentiel électrique (V_{BUS}) de ladite barre,
chaque section de générateur solaire (1) comprenant une chaîne de génération de courant continu (1g) et un commutateur (1s) adapté pour transmettre un courant électrique produit par ladite chaîne à la barre d'alimentation (11), ou pour inhiber une sortie dudit courant vers ladite barre,
l'amplificateur d'erreur (4) étant connecté d'une part à une entrée de commande du commutateur (1s) de certaines au moins des sections de générateur solaire (1a), de sorte qu'un courant moyen transmis par les dites sections peut être ajusté conformément au signal de contrôle produit par l'amplificateur d'erreur, et
l'amplificateur d'erreur (4) étant connecté d'autre part à une entrée de commande de certains au moins des modules de régulation de décharge de batterie (3a), de sorte qu'un courant de décharge (I_{DECH}) de l'ensemble de batterie (2) peut être ajusté conformément au signal de contrôle produit par l'amplificateur d'erreur,
au moins une des sections de générateur solaire (1b), appelée section de charge, étant connectée au point de sortie de l'ensemble de batterie (B) sans l'intermédiaire d'un module de régulation de décharge de batterie, de sorte qu'une partie du courant transmis par ladite section de charge peut être transmise directement à l'ensemble de batterie sans transiter par la barre d'alimentation (11),
les sections de générateur solaire (1a) autres que ladite section de charge étant connectées à la barre d'alimentation (11) sans l'intermédiaire d'un module de régulation de décharge de batterie,
ledit système d'alimentation électrique étant **caractérisé en ce que** :
le système d'alimentation comprend en outre un premier régulateur additionnel (5) connecté à l'entrée de commande d'au moins un module (3b) sélectionné parmi les modules de régulation de décharge de batterie, ledit premier régulateur additionnel étant adapté pour transmettre audit module sélectionné un signal d'ajustement d'un courant résiduel correspondant à un excès du courant qui est produit par la section de charge (1b) par rapport à une consigne de charge de l'ensemble de batterie, ledit courant résiduel étant retransmis à la barre d'alimentation (11),
l'amplificateur d'erreur (4) étant en outre connecté au premier régulateur additionnel (5) pour activer un fonctionnement dudit premier régulateur additionnel de sorte qu'une charge de l'ensemble de batterie (2) peut être effectuée à partir de la section de charge (1b) pendant que certaines des sections de générateur solaire (1a) autres que ladite section de charge transmettent à la barre d'alimentation (11) un courant qui, avec ledit courant résiduel, alimente l'ensemble d'équipement (10).

2. Système selon la revendication 1, comprenant en outre un second régulateur additionnel (6) connecté à l'entrée de commande du commutateur (1s) de la section de charge (1b), ledit second régulateur additionnel étant adapté pour commander un ajustement du courant transmis par ladite section de charge à la borne de sortie de l'ensemble de batterie (B) de sorte que ladite section de charge produise directement un courant conforme à la consigne de charge de l'ensemble de batterie (2), lorsqu'une charge dudit ensemble de batterie (2) contrôlée par le premier régulateur additionnel (5), avec la retransmission du courant résiduel à la barre d'alimentation (11), n'est pas compatible avec le courant consommé par l'ensemble d'équipement (10).

3. Système selon la revendication 1 ou 2, comprenant en outre un commutateur d'équinoxe (7) ayant lui-même une entrée et deux sorties adaptées pour être mises en contact électrique avec ladite entrée alternativement en fonction d'un signal de commande externe, la section de charge (1b) étant reliée à l'entrée dudit commutateur d'équinoxe d'une part, la borne de sortie de l'ensemble de batterie (B) et la barre d'alimentation (11) étant respectivement connectées aux deux sorties dudit commutateur d'équinoxe d'autre part.

4. Système selon les revendications 2 et 3, dans lequel les premier (5) et second (6) régulateurs additionnels sont adaptés de sorte que lorsque le commutateur d'équinoxe (7) relie électriquement la section de charge (1b) à la barre d'alimentation (11), il existe un mode de fonctionnement en solstice dudit système d'alimentation électrique suivant lequel ledit premier régulateur additionnel (5) commande une annulation du courant retransmis à la barre d'alimentation par le module de régulation de décharge sélectionné (3b), et ledit second régulateur additionnel (6) commande, si ledit second régulateur additionnel est sélectionné, une annulation du courant transmis par la section de charge (1b) à la barre d'alimentation.

5. Système selon la revendication 4, dans lequel les premier (5) et second (6) régulateurs additionnels possèdent deux décalages fixes respectifs, adaptés de sorte ledit mode de fonctionnement en solstice est déclenché lorsque la consigne de charge transmise aux dits premier et second régulateurs additionnels est intermédiaire entre les dits décalages.

6. Système selon l'une quelconque des revendications précédentes, dans lequel le potentiel électrique de la barre d'alimentation (V_{BUS}) est supérieur à un potentiel électrique maximal de sortie de l'ensemble de batterie (2), ledit système comprenant en outre un premier ensemble de résistance électrique (8) connecté entre la barre d'alimentation (11) et la borne de sortie de l'ensemble de batterie (B), ledit premier ensemble de résistance étant adapté pour recharger continûment ledit ensemble de batterie par un premier courant circulant à travers ledit premier ensemble de résistance.

7. Système selon l'une quelconque des revendications précédentes, dans lequel le potentiel électrique de la barre d'alimentation (V_{BUS}) est supérieur à un potentiel électrique maximal de sortie de l'ensemble de batterie (2), ledit système comprenant en outre un second ensemble de résistance électrique (9) et un interrupteur commandé (9a) agencés pour connecter temporairement ledit second ensemble de résistance entre la barre d'alimentation (11) et la borne de sortie de l'ensemble de batterie (B), et adaptés pour recharger ledit ensemble de batterie par un second courant circulant à travers ledit second ensemble de résistance.

8. Système selon les revendications 6 et 7, dans lequel ledit premier ensemble de résistance (8) a une première valeur de résistance supérieure à une seconde valeur de résistance dudit second ensemble de résistance (9).

9. Satellite comprenant un système d'alimentation électrique selon l'une quelconque des revendications précédentes.

10. Satellite selon la revendication 9, de type géostationnaire.

## Patentansprüche

1. Stromversorgungssystem für Satelliten mit permanent geregelter Gleichspannung, umfassend:
- eine Versorgungsschiene (11), die vorgesehen ist, mit einer stromverbrauchenden Ausrüstungseinheit (10) verbunden zu sein;
- mehrere an die Versorgungsschiene (11) angeschlossene Solargeneratorabschnitte (1);
- eine Batterieeinheit (2) mit einer Ausgangsklemme (B);
- mehrere Module (3) zur Regulierung der Batterieentladung, die jeweils zwischen den Ausgangspunkt der Batterieeinheit (B) und die Versorgungsschiene (11) geschaltet sind; und
- eine Fehlerverstärker (4), der ausgestaltet ist, zumindest ein Signal zur Steuerung zumindest eines Stroms zu erzeugen, das an die Versorgungsschiene (11) übertragen wird, um ein elektrisches Potenzial (V_{BUS}) der Schiene konstant zu halten,
wobei jeder Solargeneratorabschnitt (1) eine Gleichstromerzeugungskette (1g) und einen Schalter (1s) umfasst, der ausgestaltet ist, einen von der Kette erzeugten elektrischen Strom an die Versorgungsschiene (11) zu übertragen oder einen Fluss des Stroms zur Schiene zu verhindern,
wobei der Fehlerverstärker (4) einerseits mit einem Steuereingang des Schalters (1s) zumindest einiger der Solargeneratorabschnitte (1a) verbunden ist, sodass ein von den Abschnitten übertragener Durchschnittsstrom gemäß dem vom Fehlerverstärker erzeugten Steuerungssignal anpassbar ist, und
wobei der Fehlerverstärker (4) andererseits mit einem Eingang der Steuerung zumindest einiger der Module (3a) zur Regulierung der Entladung der Batterie verbunden ist, sodass ein Entladestrom (I_{DECH}) der Batterieeinheit (2) gemäß dem vom Fehlerverstärker erzeugten Steuerungssignal anpassbar ist,
wobei zumindest einer der Solargeneratorabschnitte (1b), der als Ladeabschnitt bezeichnet wird, ohne ein dazwischengeschaltetes Modul zur Regulierung der Batterieentladung mit dem Ausgangspunkt (B) der Batterieeinheit verbunden ist, sodass ein Teil des durch den Ladeabschnitt übertragenen Stroms direkt an die Batterieeinheit übertragen werden kann, ohne über die Versorgungsschiene (11) zu fließen,
wobei die anderen Solargeneratorabschnitte (1a) als der Ladeabschnitt ohne ein dazwischengeschaltetes Modul zur Regulierung der Batterieentladung mit der Versorgungsschiene (11) verbunden sind,
wobei das Stromversorgungssystem **dadurch gekennzeichnet ist, dass**:
das Versorgungssystem ferner einen zusätzlichen ersten Regler (5) umfasst, der mit dem Steuereingang zumindest eines Moduls (3b), ausgewählt aus den Modulen zur Regulierung der Batterieentladung, verbunden ist, wobei der zusätzliche erste Regler ausgestaltet ist, an das ausgewählte Modul ein Signal zur Einstellung eines Reststroms entsprechend einem vom Ladeabschnitt (1b) erzeugten Stromüberschuss in Bezug auf einen Ladesollwert der Batterieeinheit zu übertragen, wobei der Reststrom an die Versorgungsschiene (11) zurückübertragen wird,
wobei der Fehlerverstärker (4) ferner mit dem zusätzlichen ersten Regler (5) verbunden ist, um einen Betrieb des zusätzlichen ersten Reglers zu aktivieren, sodass eine vom Ladeabschnitt (1b) ausgehende Ladung der Batterieeinheit (2) ausgeführt werden kann, während einige andere der Solargeneratorabschnitte (1a) als der Ladeabschnitt einen Strom an die Versorgungsschiene (11) übertragen, der mit dem Reststrom die Ausrüstungseinheit (10) versorgt.

2. System nach Anspruch 1, ferner umfassend einen zusätzlichen zweiten Regler (6), der mit dem Steuereingang des Schalters (1s) des Ladeabschnitts (1b) verbunden ist, wobei der zusätzliche zweite Regler ausgestaltet ist, eine Anpassung des vom Ladeabschnitt an die Ausgangsklemme (B) der Batterieeinheit übertragenen Stroms zu steuern, sodass der Ladeabschnitt unmittelbar einen dem Ladesollwert der Batterieeinheit (2) entsprechenden Strom erzeugt, wenn eine vom zusätzlichen ersten Regler (5) gesteuerte Ladung der Batterieeinheit (2) mit der Rückübertragung des Reststroms an die Versorgungsschiene (11) nicht mit dem von der Ausrüstungseinheit (10) verbrauchten Strom kompatibel ist.

3. System nach Anspruch 1 oder 2, ferner umfassend einen Äquinoktikumschalter (7), der seinerseits einen Eingang und zwei Ausgänge aufweist, die ausgestaltet sind, alternativ in Abhängigkeit von einem externen Steuerungssignal in elektrischen Kontakt gebracht zu werden mit dem Eingang des Ladeabschnitts (1b), der an den Eingang des Äquinoktikumschalters angeschlossen ist, einerseits, sowie der Ausgangsklemme der Batterieeinheit (B) und der Versorgungsschiene (11), die jeweils mit den beiden Ausgängen des Äquinoktikumschalters verbunden sind, andererseits.

4. System nach Anspruch 2 und 3, wobei der zusätzliche erste (5) und der zusätzliche zweite (6) Regler so ausgestaltet sind, dass, wenn der Äquinoktikumschalter (7) den Ladeabschnitt (1b) mit der Versorgungsschiene (11) elektrisch verbindet, ein Sonnenwendbetriebsmodus des Stromversorgungssystems besteht, demzufolge der zusätzliche erste Regler (5) eine Aufhebung des vom ausgewählten Modul (3b) zur Regulierung der Entladung an die Versorgungsschiene zurückübertragenen Stroms steuert und der zusätzliche zweite Regler (6), wenn der zusätzliche zweite Regler ausgewählt ist, eine Aufhebung des vom Ladeabschnitt (1b) an die Versorgungsschiene übertragenen Stroms steuert.

5. System nach Anspruch 4, wobei der zusätzliche erste (5) und der zusätzliche zweite (6) Regler zwei jeweilige feste Verschiebungen besitzen, die so ausgestaltet sind, dass der Sonnenwendbetriebsmodus ausgelöst wird, wenn der an den zusätzlichen ersten und den zusätzlichen zweiten Regler übertragene Ladesollwert zwischen den beiden Verschiebungen liegt.

6. System nach einem der vorangehenden Ansprüche, wobei das elektrische Potenzial der Versorgungsschiene (V_{BUS}) größer ist als ein maximales elektrisches Potenzial des Ausgangs der Batterieeinheit, wobei das System ferner eine erste elektrische Widerstandseinheit (8) umfasst, die zwischen die Versorgungsschiene (11) und die Ausgangsklemme der Batterieeinheit (B) geschaltet ist, wobei die erste Widerstandseinheit ausgestaltet, die Batterieeinheit durch einen ersten, über die erste Widerstandseinheit fließenden Strom kontinuierlich wiederaufzuladen.

7. System nach einem der vorangehenden Ansprüche, wobei das elektrische Potenzial der Versorgungsschiene (V_{BUS}) größer ist als ein maximales elektrisches Potenzial des Ausgangs der Batterieeinheit (2), wobei das System ferner eine zweite elektrische Widerstandseinheit (9) und einen gesteuerten Schalter (9a) umfasst, die eingerichtet sind, die zweite Widerstandseinheit zeitweise zwischen die Versorgungsschiene (11) und die Ausgangsklemme (B) der Batterieeinheit zu schalten und die ausgestaltet sind, die Batterieeinheit durch einen zweiten, über die zweite Widerstandseinheit fließenden Strom wiederaufzuladen.

8. System nach Anspruch 6 und 7, wobei die erste Widerstandseinheit (8) einen ersten Widerstandswert aufweist, der höher ist als ein zweiter Widerstandswert der zweiten Widerstandseinheit (9).

9. Satellit, umfassend ein Stromversorgungssystem nach einem der vorangehenden Ansprüche.

10. Satellit nach Anspruch 9, der geostationären Typs ist.

## Claims

1. Electrical power supply system for satellite, with continuously controlled DC-voltage, including:
a main power bus (11) intended to be connected to an equipment set consuming electrical energy;
a plurality of solar generator sections (1) connected to the main power bus;
a battery unit (2), which has an output terminal (B);
a plurality of battery discharge regulator modules (3), each connected between the output point (B) of the battery unit and the main power bus (11); and
an error amplifier (4), suitable for producing at least one control signal of at least one current transmitted to the main power bus (11) in order to maintain an electric potential (V_{BUS}) of said main power bus constant,
wherein each solar generator section (1) includes a DC-current generating line (1g) and a switch (Is) suitable for transmitting an electric current produced by said line to the main power bus (11), or for inhibiting an output of said current to said main power bus,
the error amplifier (4) is connected to a control input of the switch (Is) of at least some of the solar generator sections (1a), so that an average current transmitted by said sections can be adjusted according to the control signal produced by the error amplifier, and
the error amplifier (4) is also connected to a control input of at least some of the battery discharge regulator modules (3a), so that a discharge current (I_{DIS}) of the battery (2) unit can be adjusted according to the control signal produced by the error amplifier,
at least one of the solar generator sections (1b), so-called charge section, being connected to the output point (B) of the battery unit without the intermediary of any battery discharge regulator module, so that a portion of the current transmitted by said charge section can be transmitted directly to the battery unit without passing through the main power bus (11),
in which the solar generator sections (1a) other than said charge section are connected to the main power bus (11) without the intermediary of a battery discharge regulator module,
said electrical power supply system being **characterized in that**:
the power supply system also includes a first additional regulator (5) connected to the control input of at least one module (3b) selected from the battery discharge regulator modules, with said first additional regulator being suitable for transmitting to said selected module, a signal for adjusting a residual current corresponding to an excess of the current which is produced by the charge section (1b) with respect to a charge target for the battery unit, and said residual current being retransmitted to the main power bus (11),
and in which the error amplifier (4) is further connected to the first additional regulator (5) in order to activate an operation of said first additional regulator so that a charge of the battery unit (2) can be produced from the charge section (1b) while some of the solar generator sections (1a) other than said charge section transmit, to the main power bus, a current that, with said residual current, supplies power to the equipment set (10).

2. The system according to claim 1, further comprising a second additional regulator (6) connected to the control input of the switch (Is) of the charge section (1b), in which said second regulator is suitable for controlling an adjustment of the current transmitted by said charge section to the output terminal (B) of the battery unit so that said charge section directly produces a current in accordance with the charge target of the battery unit (2), when a charge of said battery unit controlled by the first additional regulator (5), with the retransmission of the residual current to the main power bus (11), is not compatible with the current consumed by the equipment set (10).

3. The system according to claim 1 or 2, further comprising an equinox switch (7), this latter having an input and two outputs suitable for being put in electrical contact with said input alternately depending on an external control signal, in which the charge section (1b) is connected to the input of said equinox switch on one hand, and the output terminal (B) of the battery unit and the main power bus (11) are respectively connected to the two outputs of said equinox switch on the other hand.

4. The system according to claims 2 and 33, in which the first (5) and second (6) additional regulators are adapted so that when the equinox (7) switch electrically connects the charge section (1b) to the main power bus (11), there is a solstice operation mode for said electrical power supply system where said first additional regulator (5) controls a cancellation of the current retransmitted to the main power bus by the discharge regulator module(s) selected (3b), and said second additional regulator (6) controls, if said second additional regulator is selected, a cancellation of the current transmitted by the charge section(s) (1b) to the main power bus.

5. The system according to claim 4, in which the first (5) and second (6) additional regulators have two respective set offsets, adapted so that said solstice operation mode is activated when the charge target transmitted to said first and second additional regulators is intermediate between said offsets.

6. The system according to any one of the preceding claims, in which the electric potential (V_{BUS}) of the main power bus is higher than a maximum electric output potential of the battery unit (2), said system also includes a first electric resistance set (8) connected between the main power bus (11) and the output terminal (B) of the battery unit, and said first resistance set is suitable for continuously recharging said battery unit by a first current circulating through said first resistance set.

7. The system according to any one of the preceding claims, in which the electric potential (V_{BUS}) of the main power bus is higher than a maximum electric output potential of the battery unit (2), said system also includes a second electric resistance set (9) and a controlled switch (9a) arranged so as to temporarily connect said second resistance set between the main power bus (11) and the output terminal (B) of the battery unit, and suitable for recharging said battery unit by a second current circulating through said second resistance unit.

8. The system according to claims 6 and 7, in which said first resistance set (8) has a first resistance value higher than a second resistance value of said second resistance set (9).

9. A satellite including an electric power supply system according to any one of the preceding claims.

10. The satellite according to claim 9, wherein the satellite is of the geostationary type.
